# EUROPEAN PATENT SPECIFICATION

(11) **EP 0 760 561 B1**
(45) Date of publication and mention of the grant of the patent: **26.03.2003**
(21) Application number: 96113034.1
(22) Date of filing: 13.08.1996
(51) Int. Cl.: H04B 7/204

(54) **Repeaters for multibeam satellites with channels divided in subchannels and interbeam switching**
Satelliten-Zwischenverstärker zur Funkkeulen-Umschaltung von Kanälen und Teilkanälen
Répéteurs pour satellites à pinceaux multiples avec des canaux divisés en sous canaux et commutation d'un pinceau sur l'autre

(30) Priority: 30.08.1995 CA 2157209; 17.04.1996 US 633676
(43) Date of publication of application: 05.03.1997
(73) Proprietor: COM DEV LTD., Cambridge, Ontario N1R 7H6 (CA)
(72) Inventor: Peach, Robert, Cambridge, Ontario N1S 4B3 (CA); Miller, Nigel, Cambridge, Ontario N3H 3K4 (CA); Tailor, Bharat, Kitchener, Ontario N2C 2J9 (CA); Ali, Kamal, Mississauga, Ontario L5R 3K9 (CA); Beauchamp, Gary, Cambridge, Ontario N1T 1M4 (CA); Lam, Simon, Kitchener, Ontario N2C 2L8 (CA); Lazaris-Brunner, Ken, Burlington, Ontario L7M 3S5 (CA)
(74) Representative: Kindermann, Peter, Dipl.-Ing.

(56) References cited:
- US-A- 4 706 239
- US-A- 4 858 225
- HIDEYUKI SHINONAGA ET AL: "SAW FILTER MATRIX FOR SS/FDMA SYSTEM" ELECTRONICS & COMMUNICATIONS IN JAPAN, PART I - COMMUNICATIONS, vol. 77, no. 10, 1 October 1994, pages 85-95, XP000491488
- CRAIG A D ET AL: "DIGITAL SIGNAL PROCESSING IN COMMUNICATIONS SATELLITE PAYLOADS" ELECTRONICS AND COMMUNICATION ENGINEERING JOURNAL, vol. 4, no. 3, 1 June 1992, pages 107-114, XP000307314

## Description

### Background of the Invention

This invention relates to switching networks associated with multibeam communications satellite repeaters. Prior art multibeam satellite repeaters employed input demultiplexers for dividing incoming beams into a number of transponder channels. Prior to high-power amplification, these channels were interbeam switched by means of coaxial switches so that communications intelligence arriving at the satellite via one of the incoming beams could be directed to one of several output beams. These connections were made on a relatively broad channel basis, i.e. all of the information in one transponder channel had to be switched as a packet onto the outgoing channel.

Recently, a number of important developments have occurred in the mobile communications markets. For the hand-held-terminal market, interest is now focused on low-earth-orbit (LEO) and medium-earth-orbit (MEO) satellite constellations. The fixed (geostationary or GEO) market is also undergoing major changes. Traditional point-to-point communications between major population centers are being converted to optical fiber and operators are now looking to provide a far greater number of narrowbandwidth links, principally to areas that are not well served by existing terrestrial infrastructure. To this end, recently proposed satellites have more beams, higher effective isotropic radiated power (EIRP) and greater interbeam connectivity so that users will require less expensive ground terminals. These trends are being accelerated by data compression which is forcing operators to lease comparatively narrow bandwidths.

The mounting demand for greater connectivity and leases of fractions of transponders cannot be satisfied by simply increasing the number of beams since this aggravates the connectivity problem and leads to reduced transponder utilization efficiency.

The problem of interconnecting narrowbandwidth links was addressed by Ito et al. in United States Patent 4,706,239 issued November 12, 1987 and assigned to Kokusai Denshin Denwa Co. Ltd. In the Ito et al patent, each incoming radio-frequency beam is divided first into transponder channels by means of a demultiplexer as is well known in the art. Each channel is then downconverted to an intermediate frequency and further divided into subchannels by use of surface-acoustic-wave (SAW) filters. Interbeam switching is then carried out using GaAs FET switches at the relatively narrow subchannel level, rather than at the channel level as in prior systems. The output of the switches are subsequently multiplexed back into transponder channels, and upconverted to radio-frequency for amplification and multiplexing into output beams.

The Ito et al. development allows for significant improvements in satellite use by enabling greater transponder efficiency while reacting to the demand for switching of narrower bandwidth information packets. In addition, the Ito et al. improvement permits the uplinked input information at the subchannel bandwidth level to be simultaneously connected to a number of output beams, thereby permitting narrowband information broadcasting to several reception points.

There are certain conditions that must be satisfied for this form of subchannelization to be useful. First, the satellite must have multiple beams: in a system with one uplink and one downlink all traffic would have a single source and a single destination and independently switched subchannels would produce no benefit. Second, the operator must lease fractional transponders.

If these conditions are satisfied, then, in general, there will be links on the satellite with requirements for a fraction of a transponder. For example, the traffic volume from an uplink to a downlink might occupy 2.2 transponders. In this case, a system without subchannelization would require three full transponders to serve only 2.2 transponders worth of traffic. The purpose of the subchannelization is to manage the fractional part of the traffic, 0.2 of a transponder in this example, in the various links. A single subchannel could then be used for this fractional part of the traffic, leaving the other subchannels free for use in other links. The integral part of the traffic, 2 transponders in this example, could use ordinary transponder channels without loss of efficiency.

If surplus transponders are available, then partially occupied transponders are not a problem. However, the number of transponders is limited by several considerations such as cost, internationally agreed spectrum allocations, and the available power on the satellite bus. Multibeam satellites are generally power-limited. In the current state of the art, an 8-beam satellite would typically support 4 transponders per beam, though this may increase to 8 transponders per beam in the foreseeable future with the introduction of very-high-power buses. In such multibeam systems, a substantial proportion of the transponders would be partially occupied. Subchannelization allows more efficient operation of the satellite without increasing the total number of transponders. The actual capacity increase produced by subchannelization is dependent on system configuration and traffic patterns, but is typically 25%.

The major disadvantages of the Ito et al. system are the increases in the cost, mass and power budgets of the satellite to support the subchannelization of each transponder channel. The additional hardware increases, the initial system cost, and the increase in mass and power consumption (leading to an increase in power-supply hardware) must be compensated by a reduced fuel load, which in turn reduces satellite lifetime and hence long-term revenue. These factors would significantly offset the advantages of the 25% efficiency improvement gained by using the Ito method to subchannelize each of the transponder channels, and hence this method has proven to be unsatisfactory.

In the Ito et al. system, for an 8-beam, 8-channel satellite, 8 processors would be employed, each providing full 8-beam connectivity at the subchannel level. This would require substantial hardware and, consequently, would cause a substantial power drain on the satellite power bus, would increase the total mass of the satellite, and would cause an increase in the cost of both the satellite and the launch. In addition, the present inventors have conducted traffic-pattern studies which indicate that the Ito et al. full subchannelization method would not provide significantly superior performance to a satellite system with only a portion of the transponder channels subchannelized. The reason for this result is that subchannelization is useful only for managing the fractional portion of the overall satellite traffic pattern. For example, if a certain user of the satellite required the bandwidth of an entire transponder channel for its information, then subchannelization of that channel is a waste of system resources. It is therefore only worthwhile to subchannelize sufficient channels to accommodate the fractional traffic in the various links: the integral traffic volumes can then be handled by conventional transponders and switch matrices. Such an arrangement minimizes the impact of the processors on the cost, mass and power budgets, while preserving most of the benefit. In addition, further reviews indicate that a full 8-by-8 connectivity for each processor would give only marginally better performance than suitably configured 4-by-4 processors.

United States Patent US-A-4 858 225 discloses a reconfigurable switching router and a connectivity network on board a multibeam communications satellite which handles users having different requirements of bend width and transmission rates.

### Summary of the Invention

The inventors have discovered that, by combining the coaxial switch methods with the subchannelization methods taught by Ito et al., similar advantages to those of the Ito et al. system can be obtained with greatly reduced hardware complexity, and with greatly diminished power requirements, hardware and launch costs and satellite mass. For example, the traffic pattern studies conducted by the present inventors have indicated that in the 8-beam, 8-channel system considered above, subchannelizing 4 channels would typically produce a 20% capacity improvement, while subchannelizing all 8, as proposed by Ito et al., would produce only a 25% improvement. The marginal gains that can be made by going from 4 to 8 subchannelized channels do not justify the associated doubling or, possibly, quadrupling in the amount of processor hardware. The major disadvantages of the Ito et al. full subchannelizing system lies in the increase in cost, power, weight and volume budgets for a satellite. The added cost of building, launching and operating the more complex Ito et al. satellite offsets the increase in customer revenues due to the marginally more efficient use of the satellite.

The present invention combines the coaxial switching methods with the subchannelization method taught by Ito et al., wherein only a portion of the transponder channels are subchannelized, the remainder of the channels being switched using the coaxial switching method, thus enabling the commissioning of relatively inexpensive subchannelizing systems that offer more efficient transponder utilization than standard coaxial switching systems, and do so at much lower cost, weight, and power consumption than the full subchannelized system of Ito et al. The present invention thus offers new commercial opportunities hitherto not realizable. For example, service to remote communities becomes more attractive. These services would include telephone services as well as, possibly, some form of cellular service such as described in U.S.A. patent 5,081,703 by Lee et al, issued on 9 January 1992 and assigned to PACTEL CORPORATION.

### Brief Description of the Drawings

In the drawings:
Figure 1 shows the prior art that utilizes coaxial switching to accomplish interbeam switching at the transponder channel level.
Figure 2 shows the prior art improvement as described in the Ito et al. patent.
Figure 3A shows a first embodiment of the present invention.
Figure 3B shows an alternative first embodiment of the present invention with a redundant parallel architecture.
Figure 4 shows a second embodiment of the present invention in which part of the input demultiplexer is bypassed.
Figure 5 shows a third embodiment of the present invention in which digital techniques are used.
Not shown in the drawings or discussed to any extent in the description are the standard circuit components found in a satellite repeater system. These include the low-noise amplifiers, the frequency down-converters (e.g. from 14 GHz to 12 GHz) and the redundancy selection circuits. Such additional circuitry is well known in the art of satellite repeater systems.

### Detailed Description of Preferred Embodiments

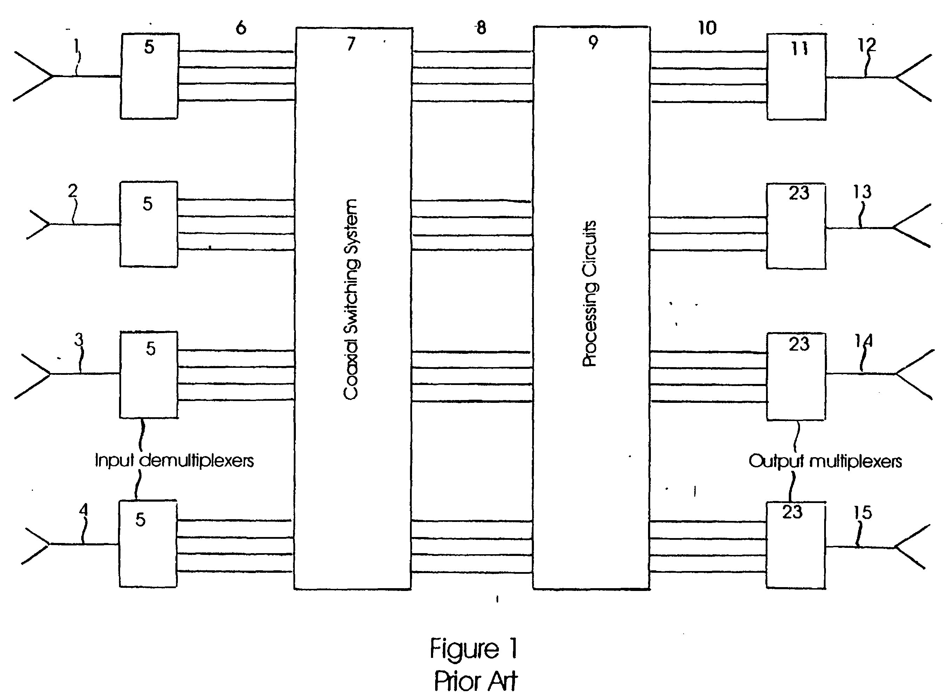

Referring to Figure 1, consideration is given to a prior art 4-beam satellite in which each beam is divided into 4 channels. Input beams 1 to 4 are fed to the input demultiplexers 5 and the resulting sixteen channels (generally shown at 6) are connected to a coaxial switching network 7 to provide for interbeam connections. The reconstituted 16 channels (generally shown at 8) are fed through further processing equipment (e.g. amplifiers) shown at 9 for connection via path (generally shown at 10) to the output multiplexers 11 and for further connection to the beam outputs shown at 12 to 15. This prior art system provides channel switching of the incoming beams to the outgoing beams, but does not provide any type of subchannelization of the transponder channels.

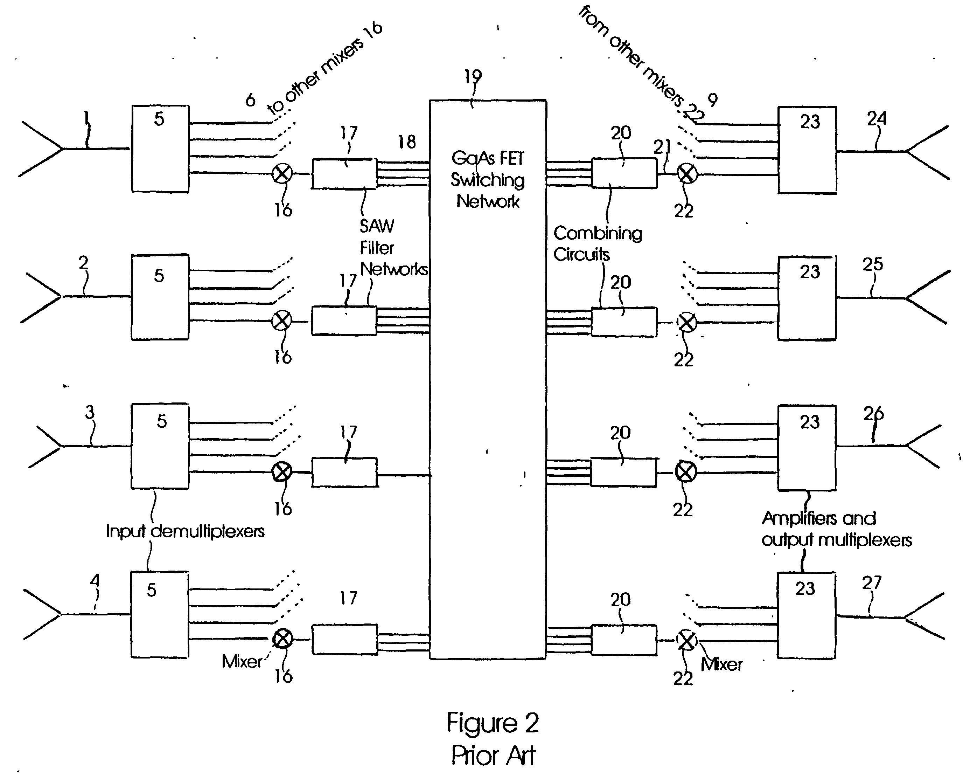

Referring to Figure 2, the prior art system of Ito et al. teaches that, for the 4-by-4 satellite described above, input beams 1 to 4 are also connected to the input demultiplexers 5 and split into sixteen channels 6. All of the channels (only one channel from each beam is shown in Figure 2 for simplicity) are downconverted via mixers shown at 16 to an intermediate frequency. After subchannelizing in the SAW filter networks 17, the subchannels are then passed (generally shown at 18) to the GaAs FET switching network 19 for interbeam connection at the subchannel level. The newly reconstituted subchannels are combined in circuits 20 to form new channels 21. These channels are upconverted via mixers 22 and fed to the high-power amplifiers and output multiplexer, shown lumped together as block 23, for onward transmission to the 4 output beam feeds shown as 24 to 27. The connectivity is the same as shown in Figure 1, but it is now provided at the subchannel, rather than at the channel, level. In the Ito et al. prior art method each of the transponder channels are likewise subchannelized and each of the subchannels is then switched using the GaAs FET switching network. There is no teaching or disclosure by the Ito et al. method of only partially subchannelizing the transponder channels, or of combining the subchannelization technique with the prior art coaxial switching technique on some portion of the transponder channels.

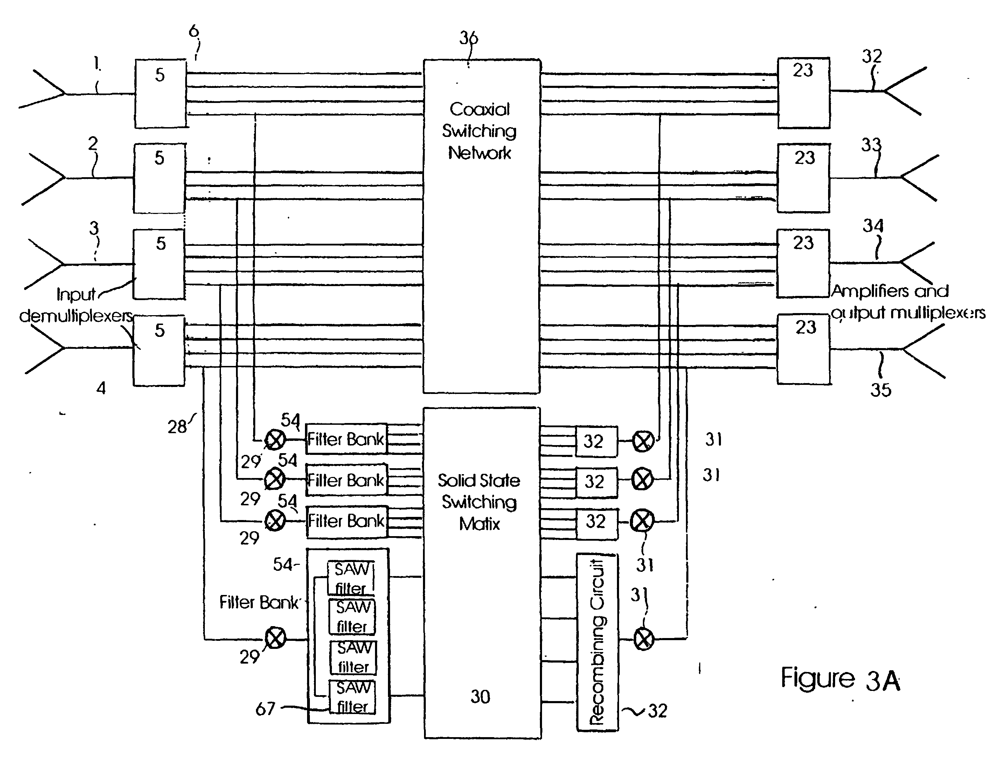

Referring now to Figure 3A in the drawings, in one embodiment of the present invention, radio-frequency signals comprising each of the four incoming beams shown as 1 to 4 respectively, and arriving at the inputs are each separated by waveguide-cavity demultiplexers 5 into 4 channels generally shown at 6. (The beams could come from terrestrial sources or, in the case of intersatellite links, from another satellite). Usually, the information on each of these derived channels is packaged so that it could be usefully further divided into subchannels. (See Ito et al.) For example, the incoming beams could be 14 GHz in frequency and channels 54 MHz in bandwidth could be generated. One channel of each demultiplexed beam is selected (shown at 28), downconverted via mixers 29 to a lower frequency (e.g. an intermediate frequency of 350 MHz) and fed to the input of a filter bank 54 of SAW filters 67, as described in Ito et al., to form subchannels. In this embodiment, two subchannels are 18 MHz in bandwidth and two are 9 MHz in bandwidth. These subchannels are interbeam switched using solid state switches in switching matrix 30: for example, Ito et al, use GaAs FET switches. The reconstituted subchannels are recombined in 32, upconverted through mixers 31 to an appropriate radio frequency such as 12 GHz and form one channel each feeding amplifiers and other appropriate processing or conditioning circuitry (not shown in the drawings). These subchannelized channels are finally fed to the input of the high-power amplifiers and output multiplexers (shown as lumped together in blocks 23) and as taught in Ito et al. The reconfigured beams, 32 to 35, comprise the output signals.

The remaining channels that were not selected for subchannelization by feeding to the filter bank are connected into the standard coaxial switching system and processed, interbeam switched and amplified. This technology is well known in the art and is generally depicted by the block 36 (refer also to Figure 1). The output of block 36 is frequency translated to 12 GHz (generally this happens prior to demultiplexing in 5) and connected in known fashion to the high-power amplifier and output multiplexer 23, in parallel with the previously described subchannelized channels from the mixers 31. In this fashion, a satellite repeater is provided which combines transponder efficiency gains similar to the full subchannelization technique with the power, cost, and weight savings properties of the standard coaxial switching system.

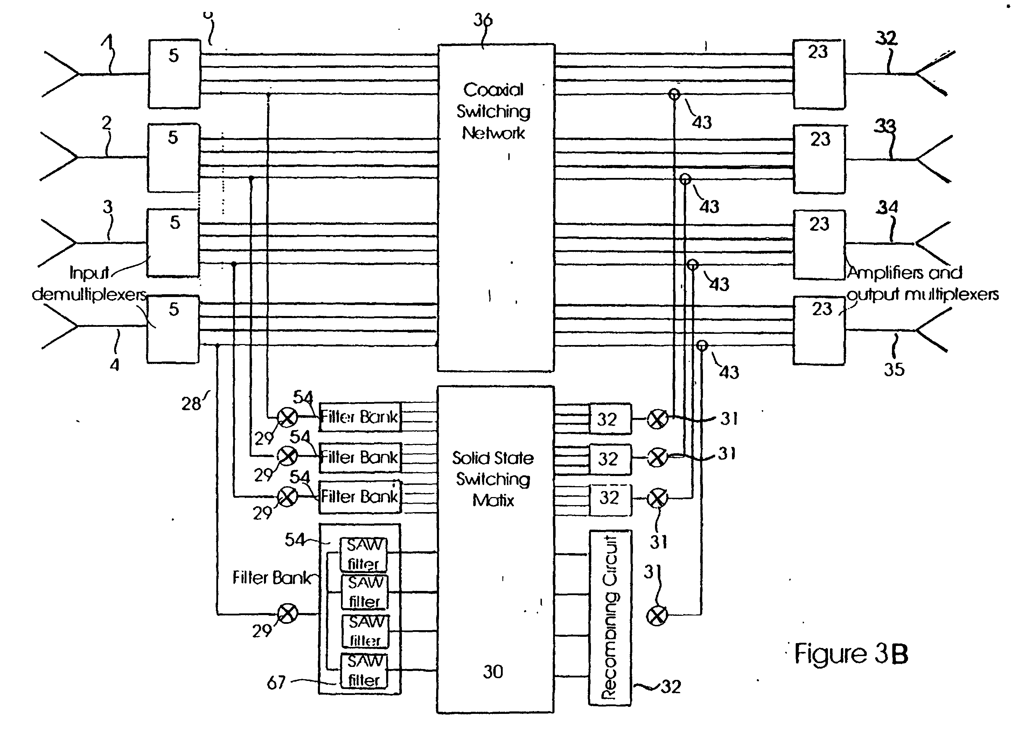

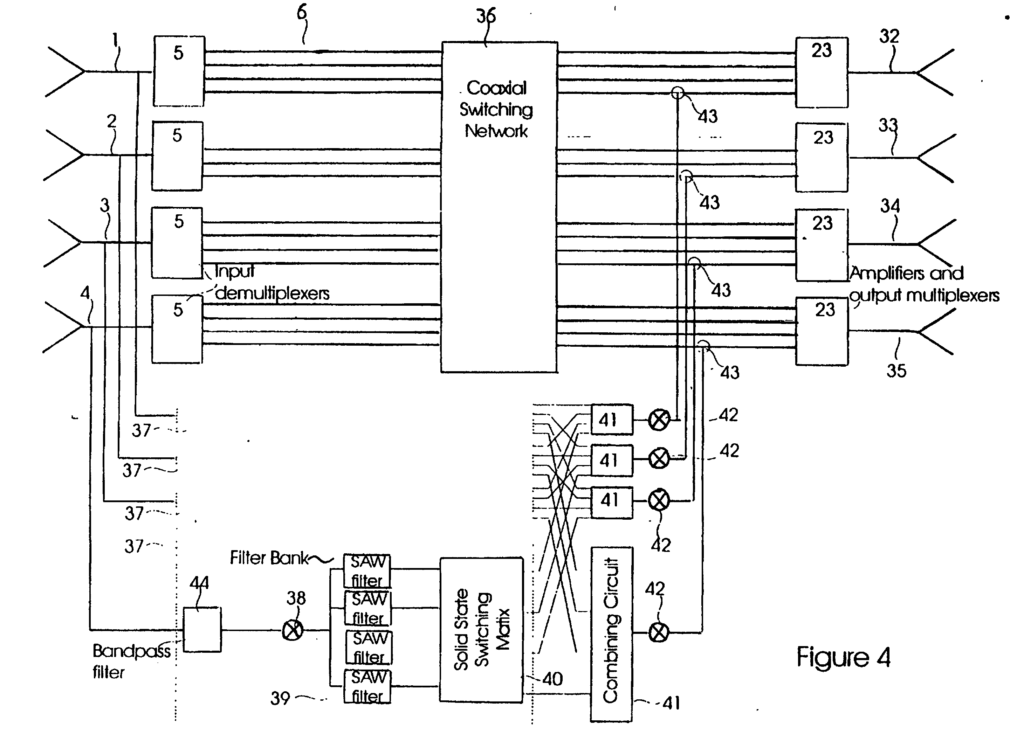

Referring now to Figure 3B of the drawings, an alternative embodiment of the present invention is set forth which is similar to the embodiment of Figure 3A, but which adds a degree of parallelism and fault tolerance to the repeater. In this alternative embodiment, instead of only feeding the non-subchannelized channels into the standard coaxial switching network 36, as set forth in Figure 3A, all of the channels 6, including those fed into the subchannelization network 28 are fed into the standard coaxial switching network 36. In order to accommodate the redundant channels that are both channel-switched by the coaxial network 36, and subchannelized and switched by the subchannel network 30, a plurality of switches 43 are interposed between the outputs of the two switching networks and the inputs of the multiplexers in a fashion similar to that disclosed below in connection with Figure 4. This architecture provides for a degree of parallelism and fault tolerance in the repeater that is not part of the prior art. For example, if one of the SAW filter banks 54 of the repeater failed, that particular channel would still be useful for channel switched information by positioning the switch 43 to select from the output of the coaxial switching network 36. Alternatively, if the coaxial switching network failed, those channels that are routed through the subchannel switching network would still be capable of use by positioning the switches 43 to select from the outputs of the subchannel network. This redundant system is more robust than a single switching network system as taught by the prior art, in that both the coaxial switching network and the subchannelizing switching network have to fail in order for the repeater to be wholly inoperative.

In another embodiment of the present invention shown in Figure 4, the incoming radio-frequency signals are fed in parallel to the input demultiplexers and to the inputs of four novel processors 37. (To avoid confusion in the understanding, only one processor 37 is shown in detail and the following will describe the operation of just one processor 37). The radio-frequency signal passes through band-limiting, noise-reducing filter 44, which uses resonators of low selectivity (when compared to the selectivity of waveguide cavity resonators in standard input demultiplexers). The purpose of filter 44 is to suppress out-of-band signals such that noise due to intermodulation and other effects are within acceptable limits for signal traffic. The signal is fed from filter 44 to mixer 38 for downconversion to a lower frequency (e.g. an intermediate frequency of 350 MHz). The resulting channel signal is then fed through a bank of SAW filters shown at 39 for subchannelization. The high selectivity of the SAW filters serve to provide fine selection of the signals corresponding to one channel only. One could choose, therefore, to design input demultiplexers that drop the channels that are treated in the SAW filter processor. However, as will be explained below, it is preferred to pass all channels through the standard coaxial switching system for reasons of redundancy. If filter 44 is of micro-stripline construction, it can be readily integrated into the printed-circuit-board design. The filtered signals representing one channel are then connected to solid-state (e.g. GaAs FET) switching matrices 40 and treated from there on as described above, i.e. combined in a known way in circuits shown at 41 and subsequently upconverted in mixers shown at 42. In parallel with the subchannelizing activity, radio-frequency signals are fed to the input demultiplexers which separate the channels. The outputs of the input demultiplexers are sent for coaxial switching in 36 as described before. The beam-switched channels from 36 are connected to high-power amplifiers and the output multiplexers as well known in the art and generally shown in blocks 23.

An added feature of this embodiment is that the newly formed subchannelized channels are connected by way of single-pole, double-throw switches 43 to appropriate output channels prior to amplification in high-power amplifiers feeding the output multiplexers. These switches are used to connect selectively either the outputs from the coaxial switching matrix or the outputs from the combining circuits 41 and mixers 42 to the amplifier/multiplexer 23. In this example, the channels sent for subchannelizing are also separated out in the input demultiplexer and fed to the coaxial switches. This arrangement allows for a degree of redundancy by providing choice of paths, i.e. if, for example, the processors 37 fail, alternate connection paths are available through the coaxial switches. Note that not all switches 43 need be thrown in the same position so that there may be various combinations of connections achieved, i.e. not all of the processors 37 need be in operational use at any one time.

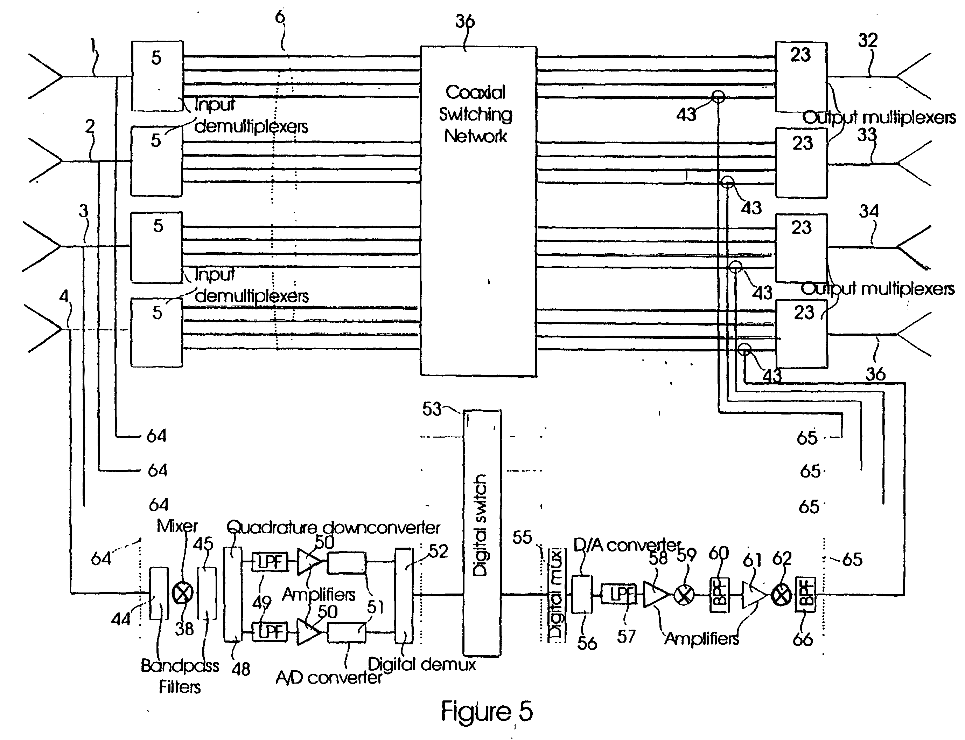

Now turning to Figure 5, in another embodiment of the present invention, a digital processor is used to subchannelize and route a set of transponder channels between beams. Figure 5 shows the digital processor with inputs from 4 beams. The various sections will be described with reference to Figure 5.

The channels for digital subchannelization can be selected either before or after the input demultiplexers as described with respect to Figures 3 and 4 above. The following describes an embodiment in which connection is made prior to the input demultiplexers 5. An arrangement such as described in Figure 4 above is used. The radio-frequency signals pass through filters 44, such as described above with reference to Figure 4, and are downconverted in mixers 38 from radio frequency to a lower frequency, i.e. an intermediate frequency such as 350 MHz as described with reference to Figure 4.

Figure 5 illustrates that a double downconversion occurs, first via the mixer 38, and then by the Quadrature downconverter 48. The dotted outline (block 64) is shown in detail only once. Within the block 64, after filtering of the intermediate frequency in 45, the signal is downconverted to baseband in quadrature downconverter 48 in order to reduce the required sampling rate. It is also possible to use a real downconversion with conversion to complex baseband performed digitally if the analog-to-digital converter has sufficient bandwidth and sampling rate. Note that the reverse of this process occurs in the upconversion chain (shown in dotted outline as block 65 and in detail only once). Lowpass filtering and amplification are supplied by filter 49 and amplifier 50 respectively so that devices operate in their optimal range. An anti-aliasing filter is required before digitizing the signal. This can be applied by either bandpass filters 45 before the final downconversion stage (for example with surface-acoustic-wave devices) or by lowpass filters 49 after the final downconversion stage 48.

The signals are converted to digital form in analog-to-digital converters 51. They feed into the inputs of digital demultiplexers 52 which take these frequency-multiplexed input signals and pass time-multiplexed signals to the input ports of digital switch 53. Demultiplexing in 52 can be performed by any number of well-known algorithms such as polyphase Fast Fourier Transform (FFT) or multistage filtering. The exact selection will depend upon the overall bandwidth and the number of subchannels. As is possible with SAW-based filtering, subchannel filtering can be performed in such a manner that if two contiguous subchannels are switched to the same output beam, the full bandwidth of both subchannels is available with no guardband between them.

The digital switch 53 routes the inputs to different outputs according to a mapping that varies according to the time slot (i.e. subchannel). This mapping can be updated to vary connectivity. The outputs go to the digital multiplexers 55.

The multiplexers 55 perform the exact inverse of processing in the demultiplexers, hence the same algorithms can be used. The time-division multiplex signal is converted to a frequency division multiplex signal at the output of the multiplexer. The digital signal is converted to analog form by a digital-to-analog converter 56 followed by a lowpass filter 57. A real upconversion in mixer 59 is illustrated but a complex upconversion can be performed if it is necessary to reduce the requirement on the digital-to-analog converter. Gain is applied by amplifier 58 as required to ensure the various devices operate at their optimum range and to ensure output signals are at the correct signal levels. After further filtering in 60 and amplification (61), the output of the upconversion (mixer 62) is filtered by bandpass filter 66 and then goes to either a conventional switch (switching points 43 as described with reference to Figure 4 are shown as one option) or a high-power amplifier, such as a travelling-wave-tube amplifier.

In the embodiments of the present invention exemplified by Figures 3 and 4, the processor is a SAW-based electronics subsystem whose function is to subchannelize 54 MHz transponders into two 9 MHz and two 18 MHz subchannels. Under operator control, the 16 subchannels are recombined, via solid-state switches, in any combination of subchannels to form four new 54 MHz channels, now containing interbeam exchanged information. However, each individual subchannel can be selected arbitrarily from any of the input beams.

Normally, a subchannel on an input beam will be routed to only one output beam but in broadcast mode (see the teaching of Ito et al.) a single subchannel or group of subchannels may be routed to multiple outputs and subchannels may be recombined such that all subchannels that make up each new 54 MHz channel have the same downlink (beam) destination. The four 54 MHz channels are then output from the processor and switched into the standard repeater path for downlinking.

In the specification, various embodiments have been shown and examples have been given. Modifications can be made without departing from the spirit of the invention. For example, bandwidths of the channels may not be equal to each other and may be more or less than 54 MHz. Also, more or fewer than four subchannels could be generated, and these could be of bandwidths to suit specific traffic requirements. Means could be included in the design (e.g. in the subchannels) to ensure approximate equalization of output power levels. Four or eight beams are given as examples: these are examples only and the invention should not be limited to those numbers of beams.

Reference has been made to the use of coaxial switching matrices. It would be recognized by those skilled in the art that other forms of electro-mechanical radio-frequency switches may be used. For example, waveguide switches may be substituted, especially where high radio frequencies, e.g. Ka-Band and higher, are to be used.

The embodiments of the invention in which an exclusive property or privilege is claimed are defined as follows.

## Claims

1. A communications repeater for a multibeam satellite in which a satellite radio-frequency communications band for each beam is comprised of a plurality of associated channels, each channel containing intelligence separable into distinct subchannels, the communications repeater comprising an input demultiplexer (5) for each incoming beam for dividing beams into channels and an output multiplexer (23) for each outgoing beam for combining channels into beams;
first means for interbeam switching (36) a plurality of the channels produced at the output of the input demultiplexers, thereby creating a set of interbeam-switched channels;
means for selecting and for dividing into subchannels (29, 54) at least one channel from each of at least two of the incoming beams;
second means for interbeam switching (30), in parallel with the first means for interbeam switching, the subchannels produced by dividing the selected channels;
means for combining (32) the interbeam-switched subchannels into a set of interbeam-switched subchannelized channels; and
means for connecting the interbeam-switched channels and the interbeam-switched subchannelized channels to the inputs of the output multiplexers.

2. The communications repeater of claim 1, wherein the first means for interbeam switching (36) comprises a matrix of electro-mechanical radio-frequency switches.

3. The communications repeater of claim 2, wherein the electro-mechanical switches are coaxial switches.

4. The communications repeater of claim 1, wherein the means for selecting and dividing is connected to an output of an input demultiplexer (5) and includes a frequency downconverter (29) in series with a bank of surface-acoustic-wave filters (54).

5. The communications repeater of claim 1, wherein the means for selecting and dividing is connected to an input of an input demultiplexer and includes, in series, a band-limiting filter (44), a frequency downconverter (38) and a bank of surface-acoustic-wave filters (54).

6. The communications repeater of claim 1, wherein the means for selecting and dividing is connected to an input of an input demultiplexer (5) and includes means for converting (64) each selected channel to a digital format and digital multiplexer (55) means to divide the converted selected channels into subchannels.

7. The communications repeater of claim 1, wherein the second means for interbeam switching (30) comprises a solid-state switching matrix.

8. The communications repeater of claim 1, wherein the second means for interbeam switching (30) comprises a matrix of GaAS FET devices.

9. The communications repeater of claim 1, wherein the means for connecting includes a switch (43) for selectively connecting either an interbeam-switched channel or an interbeam-switched subchannelized channel, to the input of an output multiplexer (23).

10. The communications repeater of claim 1, wherein the first means for interbeam switching (36) comprises a coaxial switching matrix connected to the outputs of the input demultiplexers (5) for interbeam switching, at radio frequency, channels produced at the output of the input demultiplexers, thereby to create a set of interbeam-switched channels.

11. The communications repeater of claim 1, wherein the first means for interbeam switching (36) comprises a coaxial switching matrix, and the second means for interbeam switching (30) comprises a solid-state matrix.

12. The communications repeater of claim 1, wherein the means for combining comprises a solid-state network (32) for combining the interbeam-switched subchannels into a set of interbeam-switched subchannelized channels.

13. The communications repeater of claim 12, further comprising frequency upconversion circuits (31) connected to the outputs of the solid-state network (32) to convert the set of interbeam-switched subchannelized channels to radio frequency.

14. The communications repeater of claim 1, wherein the means for connecting comprises amplifiers and filtering circuits.

15. The communications repeater of claim 4, wherein the frequency downconverter (38) is coupled through band-limiting filters (44) to the input of at least two input demultiplexers (5), the frequency downconverter (38) downconverting signals representing a channel to an intermediate frequency.

16. The communications repeater of claim 4, wherein the frequency downconverter (29) is coupled to at least one output of each of at least two input demultiplexers (5), the frequency downconverter (29) downconverting the demultiplexed channels to intermediate frequency.

17. A communications repeater for a multibeam satellite in which a satellite radio-frequency communications band for each beam is comprised of a plurality of associated channels, each channel containing intelligence separable into distinct subchannels, said communications repeater comprising
an input demultiplexer (5) for each incoming beam for dividing beams into channels and an output multiplexer (23) for each outgoing beam for combining channels into beams;
a coaxial switching matrix (36) connected to the outputs of said input demultiplexers (5) for interbeam switching, at radio frequency, said channels produced at the output of said input demultiplexers (5), thereby to create a set of interbeam-switched channels;
frequency downconverting circuits (38) connected, through band-limiting filters (44), to the inputs of at least two input demultiplexers (5), said circuits downconverting the signals at the outputs of said band-limiting filters (44) to an intermediate frequency, the down-converted signals representing at least two selected channels;
a bandpass filter (45) connected to the output of each frequency downconverting circuit (38) and each connected to the input of a quadrature downconverter (48);
each said quadrature downconverter (48) connected to the output of the bandpass filter (45) to convert the selected channel to baseband;
first lowpass filters (49) connected to the outputs of each quadrature downconverter (48);
analog-to-digital converters (51) for receiving the output signals from the first lowpass filters (49) for converting the baseband signal to digital format;
digital demultiplexers (52) connected to the outputs of the analog-to-digital converters (51) to divide the digital signals into subchannels, each subchannel being represented by a time slot;
a digital switch (53) connected to the outputs of the digital demultiplexers (52) for routing the subchannels in their time slots to digital multiplexing circuits (55), said digital multiplexing circuits (55) serving to combine the subchannels into a set of interbeam-switched subchannelized channels;
digital-to-analog converters (56) connected to the outputs of the digital multiplexing circuits (55) for converting the interbeam-switched subchannelized channels to analog format;
second lowpass filters (57) connected to the output of said digital-to-analog converters (56) for smoothing the digital-to-analog output signal and filtering of upper-frequency images;
upconverting circuits (59) for converting the outputs of the second lowpass filters (57) to radio frequency;
connecting circuitry, including amplifiers (58, 61) and filtering circuits (60, 66), to connect the interbeam-switched channels and the interbeam-switched subchannelized channels to the inputs of the output multiplexers (23).

18. The communications repeater of claim 17, wherein the bandpass filter (45) is an anti-aliasing filter to restrict the signals at its output to those of one of the selected channels only.

19. The communications repeater of claim 17, wherein the first lowpass filters are anti-aliasing filters to restrict the signals at its output to those of one of the selected channels.

20. A method of efficiently switching the channelized and subchannelized information content of beams in a multibeam satellite repeater based on a traffic pattern in which not every channel includes subchannels, the method comprising the steps of:
dividing each of the incoming beams into a plurality of channels;
dividing at least one channel in at least each of two beams into subchannels;
interbeam switching the channels to form a set of interbeam-switched channels;
interbeam switching the subchannels, in parallel with the interbeam switching of the channels, and combining the interbeam-switched subchannels to form a set of interbeam-switched subchannelized channels; and
combining the interbeam-switched subchannelized channels and the interbeam-switched channels into beams for transmission.

21. A communications repeater for use with a multibeam satellite, comprising:
a plurality of input demultiplexers (5), wherein each input demultiplexer is connected to an input beam, and wherein each input demultiplexer separates the input beam into a plurality of channels;
a coaxial switching network (36) connected to some, but not all, of the plurality of channels, wherein said coaxial switching network switches the connected channels to form a set of interbeam-switched channels;
a subchannelizing and solid state switching circuit (37) connected to the plurality of channels which are not connected to the coaxial switching network, wherein the circuit separates the connected channels into subchannels, switches the subchannels, and forms a set of interbeam-switched subchannelized channels;
a plurality of output multiplexers (23), wherein each output multiplexer is connected to at least one of the interbeam-switched channels and at least one of the interbeam-switched subchannelized channels, and wherein the output of each output multiplexer forms an output beam.

22. The communications repeater of claim 21, wherein the subchannelizing and solid state switching circuit (37) includes a plurality of downconversion mixers (38) and banks of surface-acousticwave filters (39) that separate each connected channel into subchannels.

23. The communications repeater of claim 22, wherein the subchannelizing and solid state switching circuit (37) includes a FET switching network (40) connected to the banks of surface-acousticwave filters (39), wherein the FET switching network switches the subchannels onto its outputs.

24. The communications repeater of claim 23, wherein the subchannelizing and solid state switching circuit (37) includes a plurality of recombining and upconversion circuits (41, 42), wherein each recombining and upconversion circuit is connected to a plurality of outputs from the FET switching network (40), and wherein the outputs from the plurality of recombining and upconversion circuits forms the set of interbeam-switched subchannelized channels.

## Patentansprüche

1. Ein Kommunikationszwischenverstärker für einen Multibeamsatelliten bei dem ein Satellitenfunkfrequenzkommunikationsband für jeden Beam aus einer Vielzahl von verbundenen Kanälen besteht, wobei jeder Kanal in unterschiedliche Teilkanäle unterteilbare Information enthält und der Kommunikationszwischenverstärker umfaßt:
einen Eingangsdemultiplexer (5) für jeden eingehenden Beam zum Teilen der Beams in Kanäle und einen Ausgangsmultiplexer (23) für jeden ausgehenden Beam zum Kombinieren der Kanäle in Beams;
eine erste Einrichtung zum Zwischenbeamumschalten (36) einer Vielzahl von bei dem Ausgang des Eingangsdemultiplexers erzeugten Kanälen, um dadurch einen Satz an zwischenbeamgeschalteten Kanälen zu erzeugen;
eine Einrichtung zum Auswählen und zum Teilen mindestens eines Kanals von jedem der mindestens zwei der eingehenden Beams in Teilkanäle (29, 54);
eine zweite Einrichtung zum Zwischenbeamschalten (30) parallel mit der ersten Einrichtung zum Zwischenbeamschalten, wobei die Teilkanäle durch Teilen der ausgewählten Kanäle erzeugt werden;
eine Einrichtung zum Kombinieren (32) der zwischenbeamgeschalteten Teilkanäle in einen Satz von zwischenbeamgeschalteten teilkanalisierten Kanälen; und
eine Einrichtung zum Verbinden der zwischenbeamgeschalteten Kanäle und der zwischenbeamgeschalteten teilkanalisierten Kanäle zu den Eingaben des Ausgangsmultiplexers.

2. Der Kommunikationszwischenverstärker von Anspruch 1, wobei die erste Einrichtung zur Zwischenbeamschaltung (36) eine Matrix von elektromechanischen Funkfrequenzschaltern umfaßt.

3. Der Kommunikationszwischenverstärker von Anspruch 2, wobei die elektromechanischen Schalter koaxiale Schalter sind.

4. Der Kommunikationszwischenverstärker von Anspruch 1, wobei die Einrichtung zum Auswählen und Teilen mit einem Ausgang eines Eingabedemultiplexers (5) verbunden ist, und einen Frequenzabwärtswandler (29) in Serie mit einer Parallelschaltung von Oberflächenwellenfiltern (54) enthält.

5. Der Kommunikationszwischenverstärker von Anspruch 1, wobei die Einrichtung zum Auswählen und Teilen mit einem Eingang eines Eingangsdemultiplexers verbunden ist, und in Serie einen Bandbegrenzungsfilter (44), einen Frequenzabwärtswandler (38) und eine Parallelschaltung von Oberflächenwellenfiltern (54) enthält.

6. Der Kommunikationszwischenverstärker von Anspruch 1, wobei die Einrichtung zum Auswählen und Teilen mit einem Eingang eines Eingangsdemultiplexers (5) verbunden ist und eine Einrichtung zum Umwandeln (64) jeden ausgewählten Kanals in ein digitales Format enthält, und eine Digitalmultiplexereinrichtung (55), um die umgewandelten ausgewählten Kanäle in Teilkanäle zu teilen.

7. Der Kommunikationszwischenverstärker von Anspruch 1, wobei die zweite Einrichtung zum Zwischenbeamschalten (30) eine Halbleiterschaltmatrix umfaßt.

8. Der Kommunikationszwischenverstärker von Anspruch 1, wobei die zweite Einrichtung zum Zwischenbeamschalten (30) eine Matrix von GaAs-FET-Vorrichtungen umfaßt.

9. Der Kommunikationszwischenverstärker von Anspruch 1, wobei die Einrichtung zum Verbinden einen Schalter (42) enthält zum auswählenden Verbinden entweder eines zwischenbeamgeschalteten Kanals oder eines zwischenbeamgeschalteten Teilkanals mit dem Eingang eines Ausgabemultiplexers (23).

10. Der Kommunikationszwischenverstärker von Anspruch 1, wobei die erste Einrichtung zum Zwischenbeamschalten (36) eine mit den Ausgängen der Eingabedemultiplexer (5) verbundene Koaxialschaltmatrix zum Zwischenbeamschalten von bei dem Ausgang der Eingangsdemultiplexer erzeugten Kanälen bei Funkfrequenz enthält, um dadurch einen Satz an zwischenbeamgeschalteten Kanälen zu erzeugen.

11. Der Kommunikationszwischenverstärker von Anspruch 1, wobei die erste Einrichtung zum Zwischenbeamschalten (36) eine Koaxialschaltmatrix umfaßt, und die zweite Einrichtung zum Zwischenbeamschalten (30) eine Halbleitermatrix umfaßt.

12. Der Kommunikationszwischenverstärker von Anspruch 1, wobei die Einrichtung zum Kombinieren ein Halbleiternetzwerk (32) zum Kombinieren der zwischenbeamgeschalteten Teilkanäle in einen Satz von zwischenbeamgeschalteten teilkanalisierten Kanälen umfaßt.

13. Der Kommunikationszwischenverstärker von Anspruch 12, ferner mit Frequenzaufwärtswandelschaltungen (31), die mit den Ausgängen des Halbleiternetzwerkes (32) verbunden sind, um den Satz von zwischenbeamgeschalteten teilkanalisierten Kanälen in Funkfrequenz umzuwandeln.

14. Der Kommunikationszwischenverstärker von Anspruch 1, wobei die Einrichtung zum Verbinden Verstärker und Filterschaltungen umfaßt.

15. Der Kommunikationszwischenverstärker von Anspruch 4, wobei der Frequenzabwärtswandler (38) durch die bandbegrenzenden Filter (44) mit dem Eingang von mindestens zwei Eingangsdemultiplexern (5) verbunden ist, wobei der Frequenzabwärtswandler (38) Signale, die einen Kanal darstellen, in eine Zwischenfrequenz abwärts wandelt.

16. Der Kommunikationszwischenverstärker von Anspruch 4, wobei der Frequenzabwärtswandler (29) mit mindestens einem Ausgang jedes der mindestens zwei Eingangsdemultiplexer (5) verbunden ist, wobei der Frequenzabwärtswandler (29) die demultiplexten Kanäle in eine Zwischenfrequenz abwärts wandelt.

17. Ein Kommunikationszwischenverstärker für einen Multibeamsatelliten, in dem ein Satellitenfunkfrequenzkommunikationsband für jeden Beam aus einer Vielzahl von verbundenen Kanälen besteht, wobei jeder Kanal Information, die in unterschiedliche Teilkanäle geteilt werden kann, enthält, wobei der Kommunikationszwischenverstärker umfaßt
einen Eingangsdemultiplexer (5) für jeden eingehenden Beam zum Teilen der Beams in Kanäle und einen Ausgangsmultiplexer (23) für jeden ausgehenden Beam zum Kombinieren der Kanäle in Beams;
eine Koaxialschaltmatrix (36), die mit den Ausgängen der Eingangsdemultiplexer (5), zur Zwischenbeamschaltung der bei dem Ausgang der Eingangsdemultiplexer (5) erzeugten Kanäle bei Funkfrequenz, verbunden ist, um dadurch einen Satz von zwischenbeamgeschalteten Kanälen zu erzeugen;
Frequenzabwärtswandlungsschaltungen (38), die durch bandbegrenzende Filter (44) mit den Eingängen der mindestens zwei Eingangsdemultiplexer (5) verbunden sind, wobei die Schaltungen die Signale bei den Ausgängen der bandbegrenzenden Filter (44) in eine Zwischenfrequenz abwärts wandeln und die abgewärts gewandelten Signale mindestens zwei ausgewählte Kanäle darstellen;
einen Bandpaßfilter (45), der mit dem Ausgang jeder frequenzabwärtswandelnden Schaltung (38) verbunden ist, und jede mit dem Eingang eines um 90° phasenverschiebenden Abwärtswandlers (48) verbunden ist;
jeder dieser um 90° phasenverschiebenden Abwärtswandler (48), der mit dem Ausgang des Bandpaßfilters (45) verbunden ist, um den ausgewählten Kanal in das Basisband umzuwandeln;
erste Tiefpaßfilter (49), die mit den Ausgängen jedes um 90° phasenverschiebenden Abwärtswandlers (48) verbunden sind;
Analog-Digital-Wandler (51) zum Empfangen der Ausgangssignale von den ersten Tiefpaßfiltern (49), um das Basisbandsignal in ein digitales Format umzuwandeln;
digitale Demultiplexer (52), die mit den Ausgängen der Analog-Digital-Wandler (51) verbunden sind, um die digitalen Signale in Teilkanäle zu teilen, wobei jeder Teilkanal durch einen Zeitschlitz dargestellt ist;
einen Digitalschalter (53), der mit den Ausgängen der digitalen Demultiplexer (52) zum Routen der Teilkanäle in ihren Zeitschlitzen zu Digitalmultiplexschaltungen (55) verbunden ist, wobei die digitalen Multiplexschaltungen (55) dazu dienen, die Teilkanäle in einen Satz von zwischenbeamgeschalteten teilkanalisierten Kanälen zu kombinieren;
Digital-Analog-wandler (56), die mit den Ausgängen der Digitalmultiplexschaltungen (55) zum Wandeln der zwischenbeamgeschalteten teilkanalisierten Kanäle in ein analoges Format verbunden sind;
zweite Tiefpaßfilter (57), die mit dem Ausgang der Digital-Analog-Wandler (56) verbunden sind, zum Glätten des Digital-Analog-Ausgangssignals und zum Filtern von Bildern höherer Frequenz;
Aufwärtswandelschaltungen (59) zum Wandeln der Ausgaben der zweiten Tiefpaßfilter (57) in Funkfrequenz;
eine Verbindungsschaltung, die Verstärker (58, 61) und Filterschaltungen (60, 66) enthält, um die zwischenbeamgeschalteten Kanäle und die zwischenbeamgeschalteten teilkanalisierten Kanäle mit den Eingängen der Ausgangsmultiplexer (23) zu verbinden.

18. Der Kommunikationszwischenverstärker von Anspruch 17, wobei der Bandpaßfilter (45) ein Anti-Aliasing-Filter zum Begrenzen der Signale bei seinem Ausgang auf solche einer der ausgewählten Kanäle zu begrenzen.

19. Der Kommunikationszwischenverstärker von Anspruch 17, wobei die ersten Tiefpaßfilter Anti-Aliasing-Filter sind, um die Signale an seinem Ausgang auf solche. von einem der ausgewählten Kanäle zu begrenzen.

20. Ein Verfahren zum effizienten Schalten der kanalisierten und teilkanalisierten Informationsinhalte von Beams in einem Multibeamsatellitenzwischenverstärker basierend auf einem Verkehrsmuster, in dem nicht jeder Kanal Teilkanäle enthält, wobei das Verfahren die Schritte umfasst:
Teilen jeder der Eingangsbeams in eine Vielzahl von Kanälen;
Teilen mindestens eines Kanals in mindestens jedem der zwei Beams in Teilkanäle;
Zwischenbeamschalten der Kanäle, um einen Satz von zwischenbeamgeschalteten Kanälen auszubilden;
Zwischenbeamschalten der Teilkanäle parallel mit dem Zwischenbeamschalten der Kanäle, und Kombinieren der zwischenbeamgeschalteten Teilkanäle,. um einen Satz von zwischenbeamgeschalteten teilkanalisierten Kanälen auszubilden; und
Kombinieren der zwischenbeamgeschalteten teilkanalisierten Kanäle und der zwischenbeamgeschalteten Kanäle in Beams zur Übertragung.

21. Ein Kommunikationszwischenverstärker zur Verwendung mit einem Multibeamsatelliten, mit:
einer Vielzahl von Eingangsdemultiplexern (5), wobei jeder Eingangsdemultiplexer mit einem Eingangsbeam verbunden ist, und wobei jeder Eingangsdemultiplexer den Eingangsbeam in eine Mehrzahl von Kanälen trennt;
einem Koaxialschaltnetzwerk (36), der mit einigen aber nicht allen der Mehrzahl von Kanälen verbunden ist, wobei das Koaxialschaltnetzwerk die verbundenen Kanäle schaltet, um einen Satz von zwischenbeamgeschalteten Kanälen auszubilden;
einem Teilkanalisier- und Halbleiterschaltnetz (37), das mit der Vielzahl von Kanälen verbunden ist, die nicht mit dem Koaxialschaltnetzwerk verbunden sind, wobei die Schaltung die verbundenen Kanäle in Teilkanäle trennt, die Teilkanäle schaltet und einen Satz von zwischenbeamgeschalteten teilkanalisierten Kanälen ausbildet;
einer Vielzahl von Ausgangsmultiplexern (23), wobei jeder Ausgangsmultiplexer mit mindestens einem der zwischenbeamgeschalteten Kanäle und mindestens einem der zwischenbeamgeschalteten teilkanalisierten Kanäle verbunden ist, und wobei der Ausgang jedes Ausgangsmultiplexers einen Ausgangsbeam ausbildet.

22. Der Kommunikationszwischenverstärker von Anspruch 21, wobei das Teilkanalisier- und Halbleiterschaltkreis (37) eine Vielzahl von abwärts wandelnden Mischern (38) und Parallelschaltungen von Oberflächenwellenfiltern (39) enthält, die jeden angeschlossenen Kanal in Teilkanäle trennen.

23. Der Kommunikationszwischenverstärker von Anspruch 22, wobei das Teilkanalisier- und Hälbleiterschaltnetz (37) ein FET-Schaltnetzwerk (40) enthält, das mit den Parallelschaltungen von Oberflächenwellenfiltern (39) verbunden ist, wobei das FET-Schaltnetzwerk die Teilkanäle auf ihre Ausgänge schaltet.

24. Der Kommunikationszwischenverstärker von Anspruch 23, wobei das Teilkanalisier- und Halbleiterschaltnetz (37) eine Vielzahl von Rekombinier- und Aufwärtswandel-Schaltungen (41, 42) enthält, wobei jede Rekombinier- und Aufwärtswandel-Schaltung mit einer Vielzahl von Ausgängen von dem FET-Schaltnetzwerk (40) verbunden ist, und wobei die Ausgänge der Vielzahl von Rekombinier- und Aufwärtswandel-Schaltungen den Satz an zwischenbeamgeschalteten teilkanalisierten Kanälen ausbildet.

## Revendications

1. Répéteur de communications pour un satellite multifaisceau dans lequel une bande de communications en radiofréquence satellite comprend pour chaque faisceau une pluralité de canaux associés, chaque canal contenant des informations séparables en sous-canaux distincts, le répéteur de communications comprenant un démultiplexeur d'entrée (5) pour chaque faisceau entrant de façon à diviser les faisceaux en canaux, et un démultiplexeur de sortie (23) pour chaque faisceau sortant afin de combiner les canaux en faisceaux ;
des premiers moyens pour la commutation interfaisceaux (36) d'une pluralité des canaux produits en sortie des démultiplexeurs d'entrée, créant ainsi un ensemble de canaux à faisceaux intercommutés ;
des moyens pour sélectionner et pour diviser en sous-canaux (29, 54) au moins un canal de chacun d'au moins deux des faisceaux entrants ;
des seconds moyens pour la commutation interfaisceaux (30), en parallèle avec les premiers moyens pour la commutation interfaisceaux, des sous-canaux produits en divisant les canaux sélectionnés ;
des moyens pour combiner (32) les sous-canaux à faisceaux intercommutés en un ensemble de canaux sous-canalisés à faisceaux intercommutés ; et
des moyens pour relier les canaux à faisceaux intercommutés et les canaux sous-canalisés à faisceaux intercommutés aux entrées des multiplexeurs de sortie.

2. Répéteur de communications selon la revendication 1, dans lequel les premiers moyens de commutation interfaisceaux (36) comprennent une matrice de commutateurs de radiofréquence électromécaniques.

3. Répéteur de communications selon la revendication 2, dans lequel les commutateurs électromécaniques sont des commutateurs coaxiaux.

4. Répéteur de communications selon la revendication 1, dans lequel les moyens de sélection et de division sont reliés à une sortie d'un démultiplexeur d'entrée (5) et comprennent un convertisseur abaisseur de fréquence (29) en série avec une batterie de filtres d'onde acoustique de surface (54).

5. Répéteur de communications selon la revendication 1, dans lequel les moyens de sélection et de division sont reliés à une entrée du démultiplexeur d'entrée et comprennent, en série, un filtre de limitation de bande (44), un convertisseur abaisseur de fréquence (38) et une batterie de filtres d'onde acoustique de surface (54).

6. Répéteur de communications selon la revendication 1, dans lequel les moyens de sélection et de division sont reliés à une entrée du démultiplexeur d'entrée (5) et comprennent des moyens de conversion (64) de chaque canal sélectionné en format numérique et des moyens de multiplexeur numérique (55) pour diviser les canaux sélectionnés convertis en sous-canaux.

7. Répéteur de communications selon la revendication 1, dans lequel les seconds moyens de commutation interfaisceaux (30) comprennent une matrice de commutation à semi-conducteurs.

8. Répéteur de communications selon la revendication 1, dans lequel les seconds moyens de commutation interfaisceaux (30) comprennent une matrice de dispositifs AsGa FET.

9. Répéteur de communications selon la revendication 1, dans lequel les moyens de raccordement comprennent un commutateur (43) pour connecter sélectivement un canal à faisceaux intercommutés ou un canal sous-canalisé à faisceaux intercommutés, à l'entrée d'un multiplexeur de sortie (23).

10. Répéteur de communications selon la revendication 1, dans lequel les premiers moyens de commutation interfaisceaux (36) comprennent une matrice de commutation coaxiale reliée aux sorties des démultiplexeurs d'entrée (5) pour la commutation interfaisceaux, à la radiofréquence, des canaux produits à la sortie des démultiplexeurs d'entrée, pour créer ainsi un ensemble de canaux à faisceaux intercommutés.

11. Répéteur de communications selon la revendication 1, dans lequel les premiers moyens de commutation interfaisceaux (36) comprennent une matrice de commutation coaxiale, et les seconds moyens de commutation interfaisceaux (36) comprennent une matrice à semi-conducteurs.

12. Répéteur de communications selon la revendication 1, dans lequel les moyens de combinaison comprennent un réseau à semi-conducteurs (32) pour combiner les sous-canaux à faisceaux intercommutés en un ensemble de canaux sous-canalisés à faisceaux intercommutés.

13. Répéteur de communications selon la revendication 12, comprenant également des circuits de conversion par élévation de fréquence (31) reliés aux sorties du réseau à semi-conducteurs (32) pour convertir l'ensemble de canaux sous-canalisés à faisceaux intercommutés en radiofréquence.

14. Répéteur de communications selon la revendication 1, dans lequel les moyens de connexion comprennent des amplificateurs et des circuits de filtrage.

15. Répéteur de communications selon la revendication 4, dans lequel le convertisseur abaisseur de fréquence (38) est couplé par des filtres de limitation de bande (44) à l'entrée d'au moins deux démultiplexeurs d'entrée (5), le convertisseur abaisseur de fréquence (38) sous-convertissant les signaux qui représentent un canal à une fréquence intermédiaire.

16. Répéteur de communications selon la revendication 4, dans lequel le convertisseur abaisseur de fréquence (29) est couplé à au moins une sortie de chacune des au moins deux démultiplexeurs d'entrée (5), le convertisseur abaisseur de fréquence (29) sous-convertissant les canaux démultiplexés à une fréquence intermédiaire.

17. Répéteur de communications pour un satellite multifaisceau dans lequel une bande de communications en radiofréquence satellite comprend pour chaque faisceau une pluralité de canaux associés, chaque canal contenant des informations séparables en sous-canaux distincts, ledit répéteur de communications comprenant
un démultiplexeur d'entrée (5) pour chaque faisceau entrant pour diviser les faisceaux en canaux et un multiplexeur de sortie (23) pour chaque faisceau sortant pour combiner les canaux en faisceaux ;
une matrice de commutation coaxiale (36) reliée aux sorties desdits démultiplexeurs d'entrée (5) pour une commutation interfaisceaux, à la radiofréquence, desdits canaux produits à la sortie desdits démultiplexeurs d'entrée (5), pour créer ainsi un ensemble de canaux à faisceaux intercommutés ;
des circuits de conversion par abaissement de fréquence (38) reliés, par des filtres de limitation de bande (44), aux entrées d'au moins deux démultiplexeurs d'entrée (5), lesdits circuits sous-convertissant les signaux aux sorties desdits filtres de limitation de bande (44) à une fréquence intermédiaire, les signaux de conversion par abaissement représentant au moins deux canaux sélectionnés ;
un filtre de bande passante (45) relié à la sortie de chaque circuit de conversion par abaissement de fréquence (38), chacun étant connecté à l'entrée d'un sous-convertisseur de quadrature (48) ;
chacun desdits sous-convertisseurs de quadrature (48) étant relié à la sortie du filtre de bande passante (45) pour convertir le canal sélectionné en bande de base ;
des premiers filtres de bande passante basse (49) reliés aux sorties de chaque sous-convertisseur de quadrature (48) ;
des convertisseurs analogique-numérique (51) pour recevoir les signaux de sortie des premiers filtres de bande passante basse (49) pour convertir le signal de bande de base en format numérique ;
des démultiplexeurs numériques (52) reliés aux sorties des convertisseurs analogique-numérique (51) pour diviser les signaux numériques en sous-canaux, chaque sous-canal étant représenté par un intervalle de temps ;
un commutateur numérique (53) relié aux sorties des démultiplexeurs numériques (52) pour diriger les sous-canaux dans leurs intervalles de temps vers les circuits de multiplexage numérique (55), lesdits circuits de multiplexage numérique (55) servant à combiner les sous-canaux dans un ensemble de canaux sous-canalisés à faisceaux intercommutés ;
des convertisseurs numérique-analogique (56) reliés aux sorties des circuits de multiplexage numérique (55) pour convertir les canaux sous-canalisés à faisceaux intercommutés au format analogique ;
des seconds filtres de bande passante basse (57) reliés à la sortie desdits convertisseurs numérique-analogique (56) pour lisser le signal de sortie numérique-analogique et filtrer les images de fréquence supérieure ;
des circuits de conversion par élévation de fréquence(59) pour convertir les sorties des seconds filtres de bande passante basse (57) en radiofréquence;
des circuits de raccordement, y compris des amplificateurs (58, 61) et des circuits de filtrage (60, 66), pour connecter les canaux à faisceaux intercommutés et les canaux sous-canalisés à faisceaux intercommutés aux entrées des multiplexeurs de sortie (23).

18. Répéteur de communications selon la revendication 17, dans lequel le filtre de bande passante (45) est un filtre de réduction du crénelage pour limiter les signaux de sortie à ceux de l'un des canaux sélectionnés seulement.

19. Répéteur de communications selon la revendication 17, dans lequel les premiers filtres de bande passante basse sont des filtres de réduction du crénelage pour limiter les signaux de sortie à ceux de l'un des canaux sélectionnés.

20. Procédé pour commuter efficacement le contenu d'informations canalisé et sous-canalisé de faisceaux dans un répéteur de satellite multifaisceaux sur la base d'un modèle de trafic dans lequel tous les canaux ne comprennent pas de sous-canaux, le procédé comprenant les étapes de :
division de chacun des faisceaux entrants en une pluralité de canaux ;
division d'au moins un canal d'au moins chacun de deux faisceaux en sous-canaux ;
commutation interfaisceaux des canaux pour former un ensemble de canaux à faisceaux intercommutés ;
commutation interfaisceaux des sous-canaux en parallèle avec la commutation interfaisceaux des canaux, et combinaison des sous-canaux à faisceaux intercommutés pour former un ensemble de canaux sous-canalisés à faisceaux intercommutés ; et
combinaison des canaux sous-canalisés à faisceaux intercommutés et des canaux à faisceaux intercommutés en faisceaux pour la transmission.

21. Répéteur de communications pour une utilisation avec un satellite multifaisceau, comprenant:
une pluralité de démultiplexeurs d'entrée (5), dans lequel chaque démultiplexeur d'entrée est relié à un faisceau d'entrée, et dans lequel chaque démultiplexeur d'entrée sépare le faisceau d'entrée en une pluralité de canaux ;
un réseau de commutation coaxiale (36) relié à certains des canaux, dans lequel ledit réseau de commutation coaxiale commute les canaux connectés pour former un ensemble de canaux à faisceaux intercommutés;
un circuit de sous-canalisation et de commutation à semi-conducteurs (37) relié à la pluralité de canaux qui ne sont pas reliés au réseau de commutation coaxiale, dans lequel le circuit sépare les canaux connectés en sous-canaux, commute les sous-canaux, et forme un ensemble de canaux sous-canalisés à faisceaux intercommutés ;
une pluralité de multiplexeurs de sortie (23), dans laquelle chaque multiplexeur de sortie est relié à au moins l'un des canaux à faisceaux intercommutés et au moins l'un des canaux sous-canalisés à faisceaux intercommutés, et dans lequel la sortie de chaque multiplexeur de sortie forme un faisceau de sortie.

22. Répéteur de communications selon la revendication 21, dans lequel le circuit de commutation de sous-canalisation à semi-conducteurs (37) comprend une pluralité de mélangeurs de conversion par abaissement (38) et des batteries de filtres d'onde acoustique de surface (39) qui séparent chaque canal connecté en sous-canaux.

23. Répéteur de communications selon la revendication 22, dans lequel le circuit de commutation de sous-canalisation à semi-conducteurs (37) comprend un réseau de commutation FET (40) relié aux batteries de filtres d'onde acoustique de surface (39), dans lequel le réseau de commutation FET commute les sous-canaux sur ses sorties.

24. Répéteur de communications selon la revendication 23, dans lequel le circuit de commutation de sous-canalisation et à semi-conducteurs (37) comprend une pluralité de circuits de recombinaison et de conversion par élévation de fréquence(41, 42), dans lequel chaque circuit de recombinaison et de conversion par élévation de fréquence est relié à une pluralité de sorties du réseau de commutation FET (40), et dans lequel les sorties de la pluralité de circuits de recombinaison et de conversion par élévation de fréquence forme l'ensembles de canaux sous-canalisés à faisceaux intercommutés.
